# FASCICULE DE BREVET EUROPEEN

(11) **EP 0 628 728 B1**
(45) Date de publication et mention de la délivrance du brevet: **28.01.1998**
(21) Numéro de dépôt: 94401269.9
(22) Date de dépôt: 08.06.1994
(51) Int. Cl.: F04D 29/54, F23R 3/04

(54) **Turboréacteur**
Strahltriebwerk
Jet Engine

(30) Priorité: 10.06.1993 FR 9306956
(43) Date de publication de la demande: 14.12.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Alary, Jean-Paul Daniel, F-94100 St. Maur des Fosses (FR); Barbier, Gérard Yves Georges, F-91420 Morangis (FR); Delahaye, Corinne Guylène, F-77720 Mormant (FR); Havard, Jacques Georges Wilfrid René, F-77550 Moissy Cramayel (FR); Mackovic, Paul, F-94350 Villiers s/Marne (FR); Masse, Bruno Roger, Henri, F-77000 Vaux Le Penil (FR); Merville, Didier, F-91650 Breuillet (FR); Mirville, François Jean-Pierre, F-77850 Hericy (FR); Muccioli, Serge Roger Yves, F-92100 Boulogne (FR); Sandelis, Denis Jean Maurice, F-77370 Nangis (FR); Stelter, Ralph Martin, F-77150 Lesigny (FR)

(56) Documents cités:
- EP-A- 0 485 175
- DE-A- 1 925 172
- GB-A- 1 211 534
- GB-A- 2 004 329
- US-A- 3 704 075

## Description

L'invention se rapporte à un turboréacteur comprenant, en succession le long de son axe longitudinal de symétrie, un compresseur formé de roues mobiles et d'aubages redresseurs fixes, et une chambre de combustion annulaire à double tête, entre lesquels sont interposés un diffuseur et un séparateur annulaire de flux placé entre les viroles interne et externe du diffuseur, fixé à celles-ci par des bras structuraux radiaux et présentant deux parois radialement espacées à son extrémité aval. Dans les turbomachines aéronautiques actuelles et futures, il est envisagé d'utiliser des chambres de combustion annulaires à deux têtes. Pour assurer une distribution correcte de l'air sortant du compresseur haute pression vers une chambre de combustion de ce type, il convient de prévoir un séparateur dans le carter diffuseur.

Cette dernière technologie, connue depuis fort longtemps, permet l'alimentation en air des deux modules (principal et pilote) de la chambre et le contournement de celle-ci (refroidissement des viroles internes et externes), puis l'alimentation de la zone primaire.

Ce type de diffuseur-séparateur est situé entre le dernier étage redresseur de compresseur haute pression, à une certaine distance de celui-ci, et le fond de chambre, également à une certaine distance de celle-ci.

GB-A-1 211 534 illustre cette technologie connue. Par ailleurs, DE-A-1 925 172 décrit un dispositif redresseur placé à la sortie d'un compresseur supersonique dans lequel un anneau profilé disposé parallèlement à son axe et présentant d'amont en aval une section successivement croissante puis décroissante est solidaire de l'aubage redresseur du côté aval.

En outre, GB-A-2 004 329 prévoit de disposer à la sortie d'un compresseur centrifuge un étage de stator aubagé associant des aubes de plus faible largeur et des aubes de plus grande largeur.

La présente invention propose une technologie nouvelle de diffuseur qui fait office, à la fois de redresseur et de séparateur de flux, suivant laquelle le dernier aubage redresseur en sortie du compresseur est intégré au diffuseur-séparateur, les aubes du dernier aubage redresseur formant une continuité mécanique directe avec les bras de séparateur.

L'intérêt de cette disposition est multiple.
Elle permet de :
- diminuer l'encombrement axial et la masse du corps HP (haute pression), par intégration des fonctions redresseur et diffuseur ;
- limiter en conséquence la longueur entre paliers du corps HP, ce qui permet d'améliorer sa situation dynamique (diminution des consommations de jeux sous charge lorsque l'avion équipé du turboréacteur manoeuvre) ;
- supprimer l'action néfaste des sillages du redresseur lors de la diffusion.
Dans une forme de réalisation préférée, les aubes du dernier aubage redresseur, prenant naissance en amont du séparateur, se prolongent vers l'aval pour former les bras structuraux précités. Cette disposition, qui conduit à des bras structuraux profilés comme des aubes redresseuses, a pour effet de limiter les sillages que provoqueraient des bras structuraux de forte épaisseur, de tels sillages étant préjudiciables à la tenue thermique du foyer de la chambre et à son comportement vibratoire.

Entre les aubes redresseuses formées par les bras structuraux peuvent être prévus des bras structuraux additionnels, également profilés à la manière d'aubes redresseuses, mais commençant et finissant avec le séparateur suivant la direction axiale du turboréacteur.

Suivant le cas, le séparateur peut être conçu pour diviser le flux incident en deux flux externe et interne, ou en trois flux externe, intermédiaire et interne.

On peut en outre prévoir, au niveau du diffuseur-séparateur, un dispositif de prélèvement d'air vers l'extérieur du turboréacteur, pour les besoins de l'avion (par exemple pressurisation de la cabine, dégivrage de la nacelle, etc ...) ou du turboréacteur lui-même [décharge du compresseur au démarrage (start-bleed) par exemple].

En résumé, le diffuseur-séparateur selon l'invention est un dispositif unitaire capable de remplir, sous un encombrement réduit, les multiples fonctions suivantes :
(1) Redresser l'écoulement d'air en sortie de la dernière roue mobile du compresseur haute pression de façon à le ramener dans un plan préalablement choisi et préférentiellement un plan passant par l'axe moteur.
(2) Diffuser cet écoulement d'air de façon à minimiser les pertes de charges globales (à la traversée du diffuseur et au contournement de la chambre) entre la sortie compresseur HP et le distributeur du premier étage de turbine HP.
(3) Scinder l'écoulement d'air en plusieurs flux - préférentiellement deux flux pour une chambre à deux têtes - de façon :
   . à limiter l'encombrement axial du diffuseur,
   . à minimiser la perte de charge par changement de direction,
   . à favoriser la stabilité de l'écoulement.
(4) Assurer la fonction structurale généralement assurée par le carter diffuseur de chambre, en faisant passer les efforts issus du distributeur de turbine par les aubages du carter. Dans un mode préférentiel de réalisation, les aubages sont de géométrie identique.
(5) Assurer un prélèvement d'air en aval compresseur HP, dans un mode de réalisation, en aménageant une série d'orifices inter-aubage en extrémité de la paroi externe du diffuseur, dans une zone de Mach faible.

D'autres particularités et avantages de l'invention ressortiront de la description qui va suivre, en regard des dessins annexés, d'exemples de réalisation non limitatifs.

La figure 1 représente schématiquement, en coupe par un plan radial, le dernier aubage redresseur et le diffuseur-séparateur de structure classique, ainsi que la chambre de combustion à double tête située en aval.

La figure 2 représente, également en coupe par un plan radial mais à plus grande échelle, un diffuseur-séparateur selon l'invention.

La figure 3 représente en perspective une portion du diffuseur-séparateur de la figure 2.

La figure 4 représente une variante de réalisation du diffuseur-séparateur, en coupe par un plan radial.

Les figures 5 et 6 représentent une portion du diffuseur-séparateur de la figure 4, respectivement en coupe suivant la ligne V-V et en perspective.

Les figures 7 à 9 représentent, à la manière des figures 4 et 6, une autre forme de réalisation.

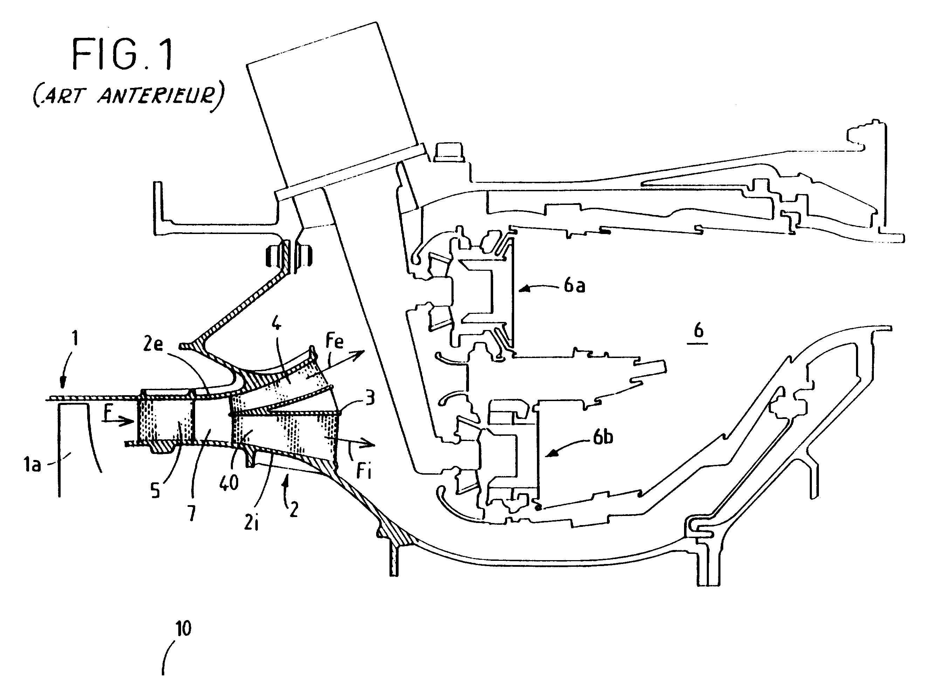

On voit sur la figure 1 la chambre de combustion 6 à double tête d'un turboréacteur d'axe longitudinal 10. En amont de cette chambre de combustion sont visibles la dernière roue mobile la du compresseur haute pression 1, suivie d'un aubage redresseur fixe 5 et d'un diffuseur 2 formé par une virole externe 2e et une virole interne 2i, entre lesquelles est disposé un séparateur annulaire 3 fixé à la virole externe 2e et à la virole interne 2i par des bras structuraux radiaux 4 et 40. Le séparateur 3 crée, à partir du flux d'air F en provenance du compresseur haute pression, un flux externe Fe à destination de la tête de ralenti 6a et un flux interne Fi à destination de la tête de décollage 6b de la chambre de combustion.

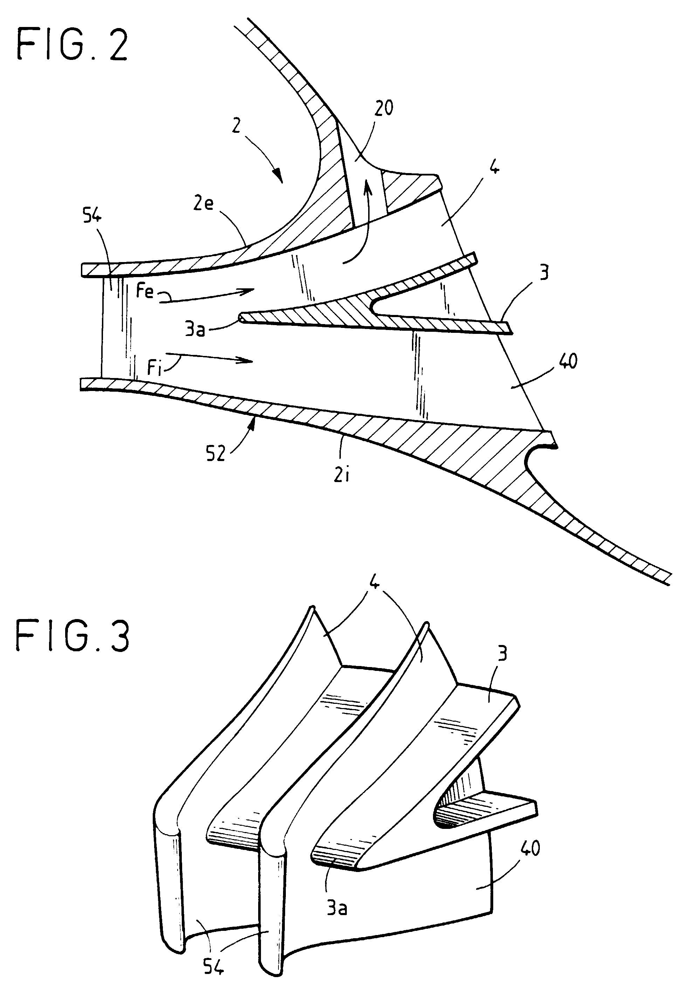

Le diffuseur-séparateur 2, 3 de la figure 1, précédé par l'aubage redresseur 5 avec un intervalle d'espacement libre 7, est avantageusement remplacé par un diffuseur-séparateur 52, 3 intégrant l'aubage redresseur 5 tel que celui qui est montré aux figures 2 et 3. Les bras structuraux 4, 40 s'étendent ici vers l'amont, au delà du bord d'attaque 3a du séparateur 3, en des prolongements 54 qui forment le dernier aubage redresseur à la sortie du compresseur haute pression.

Comme le montre également la figure 2, une série d'orifices 20 percés dans la virole externe 2e entre les bras 4 peut être prévue pour permettre un prélèvement d'air vers l'extérieur au niveau du diffuseur-séparateur 52, 3.

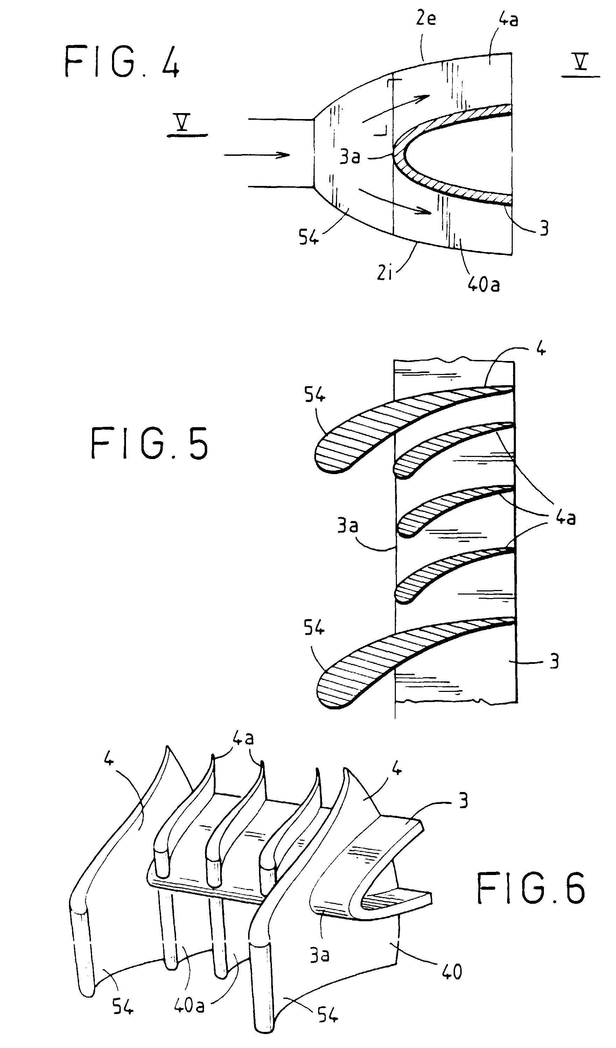

Selon les figures 4 à 6, des bras structuraux 4a-40a peuvent être interposés entre les bras structuraux 4-40. Ces bras intermédiaires, qui s'étendent radialement de l'une à l'autre des viroles internes et externes 2i, 2e, ont la même étendue axiale que le séparateur 3, les bords d'attaque de celui-ci et des bras intermédiaires étant situés sensiblement dans un même plan transversal. Toutefois, les bras intermédiaires jouent également le rôle de redresseurs et sont profilés en conséquence, comme on peut le voir sur les figures 5 et 6.

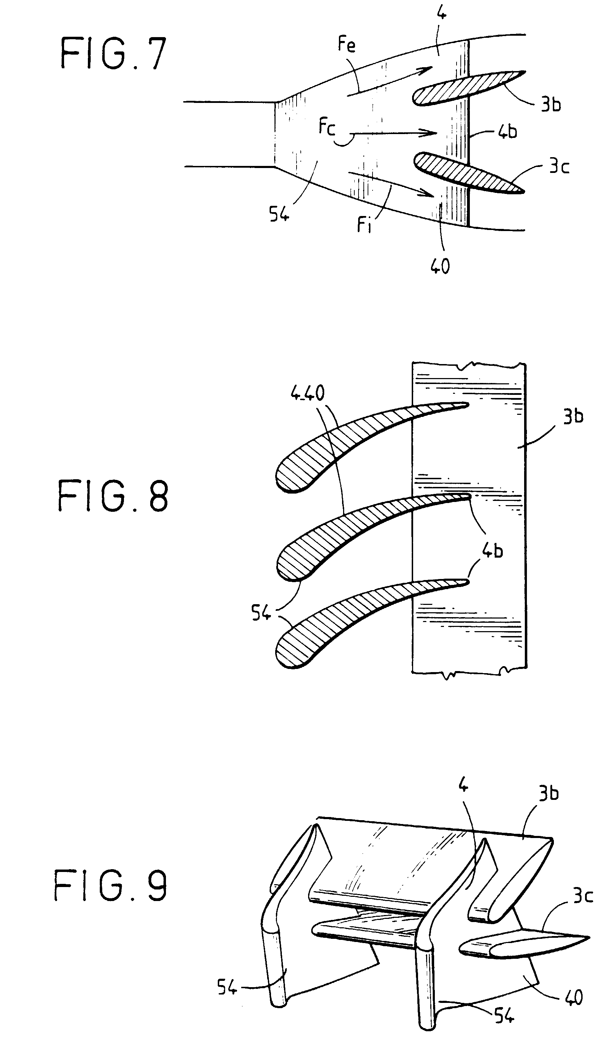

Les figures 7 à 9 montrent une variante de la forme de réalisation des figures 2 et 3, dans laquelle le séparateur 3 est décomposé en deux parois profilées 3b, 3c mutuellement espacées de façon à créer non plus deux, mais trois flux Fi, Fc et Fe, ce qui permet d'alimenter en air les deux têtes de la chambre, le flux central Fe améliorant l'alimentation de la région située entre les deux têtes. De plus, une telle variante peut permettre l'alimentation d'une chambre à trois têtes.

Dans cet exemple, les bras structuraux 4-40, profilés de façon à faire office d'aubes redresseuses, sont fortement déportés vers l'amont, leurs bords de fuite 4b ne coïncidant plus avec l'extrémité aval du séparateur, contrairement aux exemples précédents. Les parois profilées 3b, 3c sont échancrées pour pouvoir s'encastrer en partie sur les bords de fuite des bras 4-40 et y être brasées.

D'une manière générale, l'ensemble constitué par le séparateur, les bras redresseurs et les viroles externe et interne du diffuseur peut être réalisé sous la forme d'une couronne aubagée soit coulée monobloc, soit mécano-soudée ou mécano-brasée, cette couronne étant ensuite fixée aux viroles externe et interne du diffuseur par soudage.

## Revendications

1. Turboréacteur comprenant, en succession le long de son axe longitudinal de symétrie, un compresseur (1) formé de roues mobiles (la) et d'aubages redresseurs fixes, et une chambre de combustion (6) annulaire à double tête, entre lesquels sont interposés un diffuseur (52) et un séparateur annulaire (3) de flux placé entre les viroles interne (2i) et externe (2e) du diffuseur, fixé à celles-ci par des bras structuraux radiaux (4, 40) et présentant deux parois (3b, 3c) radialement espacées à son extrémité aval caractérisé par le fait que le dernier aubage redresseur (54) en sortie du compresseur (1) est intégré au diffuseur-séparateur (52, 3, 4, 40),les aubes (54) du dernier aubage redresseur formant une continuité mécanique directe avec les bras (4, 40) de séparateur.

2. Turboréacteur selon la revendication 1, caractérisé par le fait les aubes du dernier aubage redresseur, prenant naissance en amont du séparateur (3; 3b, 3c), se prolongent vers l'aval pour former les bras structuraux (4, 40) précités.

3. Turboréacteur selon la revendication 2, caractérisé par le fait qu'entre les aubes redresseuses formées par les bras structuraux (4, 40) sont prévus des bras structuraux additionnels (4a, 40a), également profilés à la manière d'aubes redresseuses, mais commençant et finissant avec le séparateur suivant la direction axiale du turboréacteur.

4. Turboréacteur selon l'une quelconque des revendications 1 à 3, caractérisé par le fait que le séparateur (3) est conçu pour diviser le flux incident en deux flux externe et interne (Fe, Fi).

5. Turboréacteur selon l'une quelconque des revendications 1 à 3, caractérisé par le fait que le séparateur (3b, 3c) est conçu pour diviser le flux incident en trois flux externe, intermédiaire et interne (Fe, Fc, Fi).

6. Turboréacteur selon l'une quelconque des revendications 1 à 5, caractérisé par le fait que le diffuseur-séparateur est pourvu d'un dispositif de prélèvement d'air vers l'extérieur du turboréacteur.

7. Turboréacteur selon l'une quelconque des revendications 1 à 6, caractérisé par le fait que le diffuseur-séparateur est réalisé par moulage en une pièce unique.

8. Turboréacteur selon l'une quelconque des revendications 1 à 6, caractérisé par le fait que le diffuseur-séparateur est réalisé par mécano-soudage ou mécano-brasage.

## Patentansprüche

1. Strahltriebwerk, das entlang seiner Längssymetrieachse aufeinanderfolgend einen aus Laufrädern (1a) und festen Leitschaufeln gebildeten Verdichter (1) und eine Doppelkopf-Ringbrennkammer (6) aufweist, zwischen denen sich ein Diffusor (52) und ein ringförmiger Strömungs-Separator (3) befinden, der zwischen dem Innenmantel (2i) und dem Außenmantel (2e) des Diffusors angeordnet und an diesen mit radialen Stützrippen (4, 40) befestigt ist und der zwei Wandungen (3b, 3c) besitzt, die an seinem stromabwärtigen Ende radialen Abstand voneinander haben,
**dadurch gekennzeichnet**,
daß die letzte Leitbeschaufelung (54) am Ausgang des Verdichters (1) in den Diffusor-Separator (52, 3, 4, 40) integriert ist, wobei die Schaufeln (54) der letzten Leitbeschaufelung eine direkte mechanische kontinuierliche Einheit mit den Stützrippen (4, 40) des Separators bilden.

2. Strahltriebwerk nach Anspruch 1,
dadurch gekennzeichnet,
daß die Schaufeln der letzten Leitbeschaufelung, die stromaufwärts des Separators (3; 3b, 3c) beginnen, sich zur stromabwärtigen Seite hin verlängern, um die genannten Stützrippen (4, 40) zu bilden.

3. Strahltriebwerk nach Anspruch 2,
dadurch gekennzeichnet,
daß zwischen den von den Stützrippen (4, 40) gebildeten Leitschaufeln zusätzliche Stützrippen (4a, 40a) vorgesehen sind, die ebenfalls nach Art von Leitschaufeln profiliert sind, in axialer Richtung des Strahltriebwerks jedoch mit dem Separator beginnen und enden.

4. Strahltriebwerk nach einem der Ansprüche 1 bis 3,
dadurch gekennzeichnet,
daß der Separator (3) so konzipiert ist, daß er die ankommende Strömung in zwei Strömungen aufteilt, nämlich eine externe Strömung (Fe) und eine interne Strömung (Fi).

5. Strahltriebwerk nach einem der Ansprüche 1 bis 3,
dadurch gekennzeichnet,
daß der Separator (3) so konzipiert ist, daß er die ankommende Strömung in drei Strömungen aufteilt, nämlich eine externe Strömung (Fe), eine mittlere Strömung (Fc) und eine interne Strömung (Fi).

6. Strahltriebwerk nach einem der Ansprüche 1 bis 5,
dadurch gekennzeichnet,
daß der Diffusor-Separator mit einer Vorrichtung zur Entnahme von Luft in den Raum außerhalb des Strahltriebwerks ausgestattet ist.

7. Strahltriebwerk nach einem der Ansprüche 1 bis 6,
dadurch gekennzeichnet,
daß der Diffusor-Separator als einstückiges Gußteil hergestellt ist.

8. Strahltriebwerk nach einem der Ansprüche 1 bis 6,
dadurch gekennzeichnet,
daß Diffusor-Separator durch Mechano-Schweißen oder Mechano-Löten hergestellt ist.

## Claims

1. A turbojet engine comprising in succession along its longitudinal axis of symmetry a compressor (1) consisting of rotor stages (1a) and fixed straightening vane stages, an annular twin-headed combustion chamber (6) and, in between, a diffuser (52) and an annular flow separator (3) disposed between the inner casing (2i) and the outer casing (2e) of the diffuser, the separator (3) being secured to the casings by radial structural arms (4, 40) and having two radially spaced-apart walls (3b, 3c) at its downstream end, characterised in that the final straightening stage (54) at the outlet of the compressor (1) is integral with the diffuser-separator (52, 3, 4, 40), the vanes (54) of the final straightening stage being in direct mechanical continuity with the separator arms, (4, 40).

2. A turbojet engine according to claim 1,
characterised in that the vanes of the final straightening stage start upstream of the separator (3; 3b, 3c) and are prolonged downstream to form the structural arms (4, 40).

3. A turbojet engine according to claim 2,
characterised in that additional structural arms (4a, 40a) are provided between the straightening vanes formed by the structural arms (4, 40) and are also shaped like straightening vanes but start and end with the separator axially of the engine.

4. A turbojet engine according to any of claims 1 to 3,
characterised in that the separator (3) is designed to divide the incident flow into two flows, namely an external flow and an internal flow (Fe, Fi).

5. A turbojet engine according to any of claims 1 to 3,
characterised in that the separator (3b, 3c) is designed to divide the incident flow into three flows, namely an external flow, an intermediate flow and an internal flow (Fe, Fc, Fi).

6. A turbojet engine according to any of claims 1 to 5, characterised in that the diffuser-separator has means for bleeding air to outside the jet engine.

7. A turbojet engine according to any of claims 1 to 6, characterised in that the diffuser-separator is embodied as a unitary moulding.

8. A turbojet engine according to any of claims 1 to 6, characterised in that the diffuser-separator is made by machine welding or machine brazing.
